# EUROPEAN PATENT APPLICATION

(11) **EP 4 585 366 A1**
(43) Date of publication of application: **16.07.2025**
(21) Application number: 22958058.4
(22) Date of filing: 06.09.2022
(51) Int. Cl.: B23Q 17/09, B23Q 17/22

(54) **CUTTING SYSTEM AND METHOD FOR DETERMINING STATUS OF ROTATING TOOL**

(71) Applicant: SUMITOMO ELECTRIC INDUSTRIES, LTD., Osaka-shi, Osaka 541-0041 (JP)
(72) Inventor: KOIKE, Yusuke, Osaka-shi, Osaka 541-0041 (JP)
(74) Representative: Boult Wade Tennant LLP
(86) International application number: PCT/JP2022/033386
(87) International publication number: WO 2024/052979

(57) **Abstract**

According to the present invention, a cutting system comprises a rotating tool, a plurality of sensors attached to a shaft section of the rotating tool, and a management device. The management device determines the status of the rotating tool on the basis of sensor information from the plurality of sensors. The plurality of sensors include at least one acceleration sensor and at least one strain sensor. The management device determines the presence or absence of rotation of the rotating tool on the basis of the sensor information from the at least one acceleration sensor, and determines the presence or absence of contact between the rotating tool and an object to be cut, on the basis of the sensor information from the at least one strain sensor.

## Description

### TECHNICAL FIELD

The present disclosure relates to a cutting system and a method of determining a state of a rotating tool.

### BACKGROUND ART

WO 2021/029099 (Patent literature 1) discloses a rotating tool including a plurality of sensors including an acceleration sensor and a strain sensor in a tool holder.

### CITATION LIST

### PATENT LITERATURE

Patent literature 1: WO 2021/029099

### SUMMARY OF INVENTION

A cutting system according to the present disclosure includes a rotating tool, a plurality of sensors attached to the rotating tool, and a management apparatus. The management apparatus determines a state of the rotating tool based on sensor information from the plurality of sensors. The plurality of sensors includes at least one acceleration sensor and at least one strain sensor. The management apparatus is configured to determine whether the rotating tool is rotating based on sensor information from the at least one acceleration sensor, and determine whether the rotating tool and the workpiece are in contact with each other based on sensor information from the at least one strain sensor.

The method according to the present disclosure is a method of determining a state of a rotating tool. At least one acceleration sensor and at least one strain sensor are disposed on the rotating tool. The method includes: acquiring sensor information from the at least one acceleration sensor and at least one strain sensor; determining whether the rotating tool is rotating based on the sensor information from the at least one acceleration sensor; and determining whether the rotating tool and the workpiece are in contact with each other based on the sensor information from the at least one strain sensor.

### BRIEF DESCRIPTION OF THE DRAWINGS

FIG. 1 is a diagram showing an overview of a cutting system according to the present embodiment.
FIG. 2 is a diagram showing a rotating tool in which a shaft portion is attached to a tool holder.
FIG. 3 is a diagram showing the arrangement of sensors when the rotating tool is viewed in the positive direction of the Z-axis.
FIG. 4 is a diagram showing an example of detection signals of the each sensor when the rotational speed of the rotating tool is changed in a no-load state.
FIG. 5 is a diagram for explaining the state of the rotating tool based on the detection signals of the each sensor.
FIG. 6 is a flowchart for explaining a state determination process of a rotating tool, which is executed by the management apparatus.
FIG. 7 is a diagram showing a rotating tool for modification.

### DETAILED DESCRIPTION

### [Problems to be Solved by Present Disclosure]

An object of the present disclosure is to provide a cutting system and method capable of determining a state of a rotating tool based on information from a plurality of sensors attached to the rotating tool.

### [Advantageous Effects of Present Disclosure]

According to the present disclosure, it is possible to provide a cutting system and method capable of determining the state of a rotating tool based on information from a plurality of sensors attached to the rotating tool.

### [Description of Embodiments of Present Disclosure]

First, embodiments of the present disclosure will be listed and described.
(1) A cutting system 50 according to the present disclosure includes a rotating tool 100, a plurality of sensors 120, 130, and a management apparatus 200. Rotating tool 100 includes a shaft portion 106 having a first end portion 107 provided with a cutting edge portion for cutting a workpiece 18 and a second end portion 108 attached to a tool holder 105. The plurality of sensors 120, 130 are attached to shaft portion 106 of rotating tool 100. Management apparatus 200 determines a state of rotating tool 100 based on sensor information from the plurality of sensors 120, 130. The plurality of sensors includes at least one acceleration sensor 120 and at least one strain sensor 130. Management apparatus 200 is configured to determine whether rotating tool 100 is rotating based on sensor information from at least one acceleration sensor 120, and determine whether rotating tool 100 and the workpiece are in contact with each other based on sensor information from at least one strain sensor 130.
(2) In cutting system 50 according to the above (1), tool holder 105 rotating tool 100 rotates about an axial direction of shaft portion 106 as a rotation axis. At least one acceleration sensor 120 is disposed to detect centrifugal acceleration of rotating tool 100.
(3) In cutting system 50 according to the above (2), the plurality of sensors include a plurality of acceleration sensors 120. The plurality of acceleration sensors 120 are disposed on a concentric circle around the rotation axis of shaft portion 106 in a same plane having the rotation axis as a normal line.
(4) In cutting system 50 according to the above (3), the plurality of acceleration sensors 120 include four acceleration sensors 120 disposed at positions at which intervals between central portions of acceleration sensor 120 are 90° in a peripheral direction of shaft portion 106.
(5) In cutting system 50 according to any one of the above (1) to (3), management apparatus 200 is configured to determine that rotating tool 100 is rotating when an acceleration detected by at least one acceleration sensor 120 is more than a first threshold value. Further, management apparatus 200 is configured to determine that rotating tool 100 is being stopped when the acceleration detected by at least one acceleration sensor 120 is less than the first threshold value.
(6) In cutting system 50 according to the above (1), rotating tool 100 rotates about an axial direction of shaft portion 106 as a rotation axis. The at least one strain sensor 130D is disposed to detect a strain in a peripheral direction of shaft portion 106.
(7) In cutting system 50 according to the above (1), the plurality of sensors include a plurality of strain sensors 130. The plurality of strain sensors 130 are disposed on a concentric circle around the rotation axis of shaft portion 106 in a same plane having the rotation axis as a normal line.
(8) In cutting system 50 according to the above (7), the plurality of strain sensors 130 include four strain sensors 130A to 130D disposed at positions at which intervals between the central portions of the strain sensors are 90° in a peripheral direction of shaft portion 106.
(9) In cutting system 50 according to any one of the above (6) to (8), management apparatus 200 is configured to determine that rotating tool 100 is in contact with workpiece 18 when the strain in the peripheral direction of shaft portion 106 detected by at least one strain sensor 130D is more than a second threshold value. Management apparatus 200 is configured to determine that rotating tool 100 is not in contact with workpiece 18 when the strain in the peripheral direction of shaft portion 106 detected by at least one strain sensor 130D is less than the second threshold value.
(10) In cutting system 50 according to the above (1), rotating tool 100 rotates about an axial direction of shaft portion 106 as a rotation axis. At least one acceleration sensor 120 and at least one strain sensor 130 are alternately disposed in a peripheral direction of shaft portion 106.
(11) In cutting system 50 according to the above (1), management apparatus 200 is configured to determine whether rotating tool 100 is cutting based on sensor information from at least one acceleration sensor 120 and sensor information from at least one strain sensor 130.
(12) In cutting system 50 according to the above (11), management apparatus 200 is configured to determine that rotating tool 100 is cutting when an acceleration detected by at least one acceleration sensor 120 is more than a first threshold value and a strain in a peripheral direction of shaft portion 106 detected by at least one strain sensor 130 is more than a second threshold value.
(13) In cutting system 50 according to the above (11), management apparatus 200 is configured to determine that rotating tool 100 is in an abnormal state when an acceleration detected by at least one acceleration sensor 120 is less than a first threshold value and a strain in a peripheral direction of shaft portion 106 detected by at least one strain sensor 130 is more than a second threshold value.
(14) In cutting system 50 according to the above (13), management apparatus 200 is configured to notify a user of the abnormal state when management apparatus 200 has determined that rotating tool 100 is in the abnormal state.
(15) In cutting system 50 according to the above (11), management apparatus 200 is configured to determine that rotating tool 100 is rotating in a state where it is not cutting when an acceleration detected by at least one acceleration sensor 120 is more than a first threshold value and a strain in a peripheral direction of shaft portion 106 detected by at least one strain sensor 130 is less than a second threshold value.
(16) In cutting system 50 according to the above (1), rotating tool 100 includes shaft portion 106 having first end portion 107 provided with a cutting edge portion for cutting workpiece 18 and second end portion 108 attached to tool holder 105. Management apparatus 200 is configured to correct a measurement value of at least one strain sensor 130 to zero at a timing when the strain in the axial direction of shaft portion 106 detected by at least one strain sensor 130 is less than a second threshold value.
(17) Cutting system 50 according to any one of the above (1) to (16) further includes a wireless communication device 140 attached to tool holder 105 for transmitting sensor information from the plurality of sensors 120, 130 to management apparatus 200.
(18) Cutting system 50 according to any one of the above (1) to (17) further includes a power storage device 150 attached to tool holder 105 and configured to supply electric power for driving the plurality of sensors 120, 130.
(19) In cutting system 50 according to any one of (1) to (18), management apparatus 200 further includes a storage device 230 for storing sensor information from the plurality of sensors 120, 130.
(20) In cutting system 50 according to the above (19), management apparatus 200 is configured to store the sensor information from the plurality of sensors 120, 130 in storage device 230 with label information corresponding to a state of rotating tool 100 attached.
(21) In cutting system 50 according to the above (20), management apparatus 200 is configured to store in advance a state transition of rotating tool 100 from the start of machining to completion of machining of workpiece 18. Management apparatus 200 is configured to classify the sensor information stored in storage device 230 as a machining data group on workpiece -by-workpiece 18 basis based on the state transition and the label information.
(22) In cutting system 50 according to the above (20), management apparatus 200 is configured to store in advance a state transition of rotating tool 100 from start of machining to completion of machining of workpiece 18 as first data. Management apparatus 200 notifies the user of the machining abnormality of workpiece 18 when the second data indicating the state transition of rotating tool 100 acquired from the sensor information acquired from the start of machining to completion of machining of workpiece 18 does not match the first data.
(23) A method according to the present disclosure is a method of determining a state of rotating tool 100 including shaft portion 106 having a first end portion provided with a cutting edge portion for cutting a workpiece and a second end portion attached to a machine tool. At least one acceleration sensor 120 and at least one strain sensor 130 are disposed in shaft portion 106. The method includes: the steps of acquiring sensor information from at least one acceleration sensor 120 and at least one strain sensor 130; determining whether rotating tool 100 is rotating based on the sensor information from at least one acceleration sensor 120; and determining whether rotating tool 100 and workpiece 18 are in contact with each other based on the sensor information from at least one strain sensor 130.

### [Details of Embodiments of Present Disclosure]

Hereinafter, embodiments of the present disclosure will be described in detail with reference to the drawings. In the drawings, the same or corresponding parts are denoted by the same reference numerals, and the description thereof will not be repeated. Further, at least a part of the embodiments described below may be arbitrarily combined.

### (Overview of Cutting System)

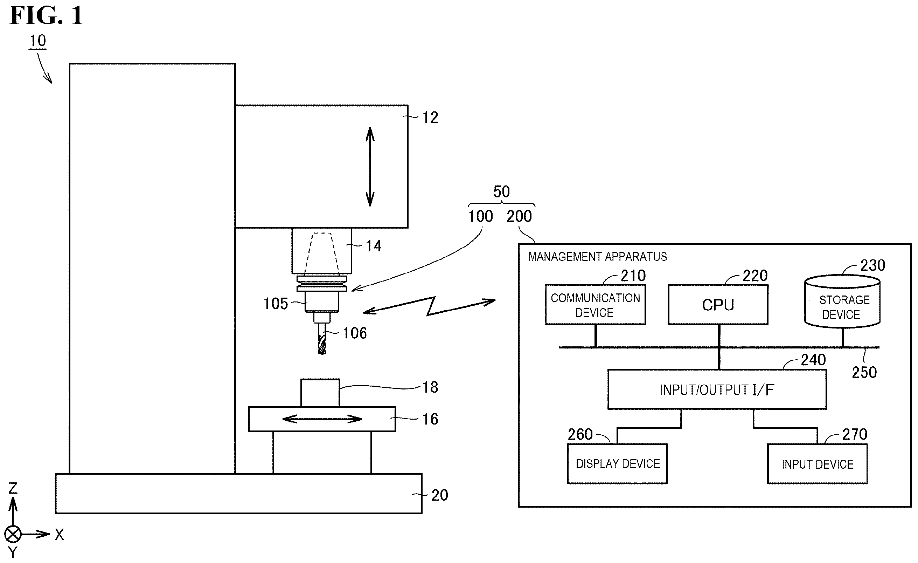

FIG. 1 is a diagram showing an overview of a cutting system 50 according to the present embodiment. Referring to FIG. 1, cutting system 50 includes a rotating tool 100 and a management apparatus 200. Rotating tool 100 is attached to a machine tool 10 such as a machining center or a milling machine, and is used for cutting machining of a workpiece 18 to be cut.

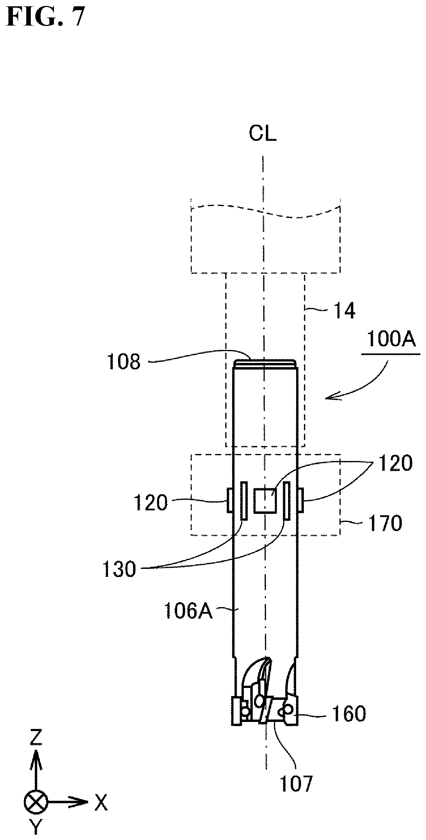

Machine tool 10 in the example of FIG. 1 is a vertical machining center, and rotating tool 100 is attached to a main shaft (spindle) 14 provided on a head 12 that moves in the vertical direction (Z axial direction). In FIG. 1, rotating tool 100 includes a shaft portion 106 in which a cutting edge portion is formed, and a tool holder 105 for holding shaft portion 106, and a portion of tool holder 105 is attached to machine tool 10. Note that, as in a modification described later with reference to FIG. 7, shaft portion 106 including a cutting insert 160 (see FIG. 7) may be directly attached to machine tool 10 without using tool holder 105. Rotating tool 100 is rotated by a motor (not shown) disposed in main shaft 14 about the Z axial direction as a rotation axis.

Workpiece 18 is disposed on a table 16 provided on a bed 20. Table 16 is configured to be movable on the XY plane. Workpiece 18 is cut by bringing it into contact with rotating tool 100, while rotating tool 100 rotates and the relative position between rotating tool 100 and workpiece 18 is changed by moving table 16 and head 12.

Although machine tool 10 is described by using a three axis vertical machining center as an example of machine tool 10 in FIG. 1, machine tool 10 may be a horizontal machining center with a main shaft disposed in the horizontal direction, or may have four or more axes of motion.

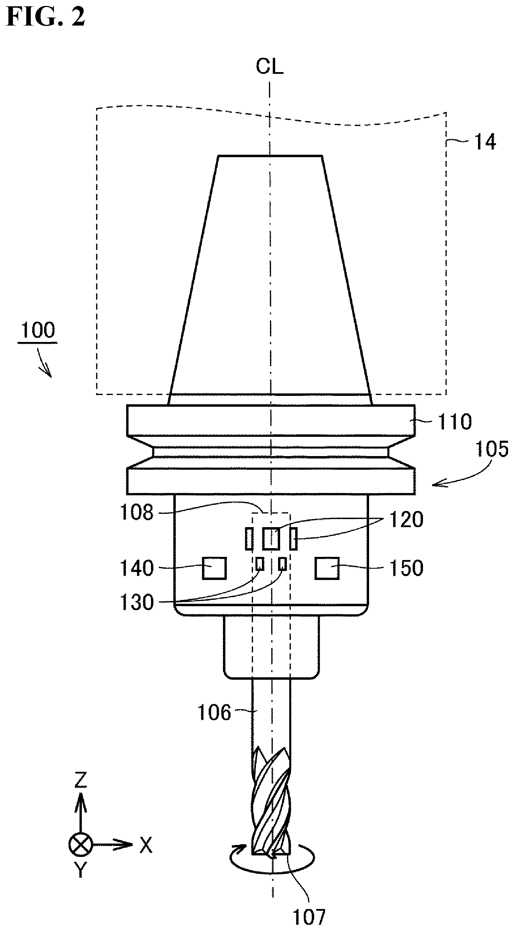

As will be described later with reference to FIG. 2, a plurality of sensors are attached to rotating tool 100. The sensor can detect a force applied to rotating tool 100.

Management apparatus 200 determines and manages the state of rotating tool 100 using the detection value of the sensor attached to rotating tool 100. Management apparatus 200 includes a communication device 210, a central processing unit (CPU) 220 that is a control device, a storage device 230, an input/output interface (I/F) 240, a display device 260, and an input device 270.

Communication device 210, CPU 220, storage device 230, and input/output I/F 240 are connected to a common bus 250, and are configured to be able to transmit and receive signals to and from each other. Display device 260 and input device 270 are connected to input/output I/F 240 in a wired or wireless manner.

Communication device 210 is a wireless communication device, and wirelessly acquires a detection value of a sensor attached to tool holder 105. CPU 220 executes a program stored in storage device 230 and processes a detection value of the sensor acquired by communication device 210 to determine the state of rotating tool 100.

Storage device 230 includes a memory such as a read only memory (ROM) and a random access memory (RAM), and a mass storage device such as a hard disc drive (HDD) or a solid state disk (SSD). Storage device 230 is used as a buffer during process of CPU 220, and is also used to store a program executed by CPU 220, a detection value of the sensor, and/or a calculation result by CPU 220.

Input device 270 is, for example, a pointing device such as a keyboard, a mouse, a trackball, or a touch panel, and receives an operation signal from a user. Display device 260 is typically a liquid crystal panel or an organic EL (Electro Luminescence) panel, and displays a calculation result by CPU 220 and information stored in storage device 230 to the user.

Input/output I/F 240 is an interface for connecting display device 260 and input device 270. Input/output I/F 240 receives a user operation signal from input device 270 and outputs information to be notified to the user to display device 260.

### (Object of Present Embodiment)

In the rotating tool used in the machine tool as described above, abnormalities such as wear or chipping of the cutting edge portion may occur with use. When an abnormality occurs in the rotating tool, the workpiece to be cut cannot be cut properly, which may lead to a decrease in machining accuracy or damage to the workpiece or the tool itself. In response to the problem, as disclosed in WO 2021/029099 (Patent Literature 1), there is known a configuration in which a plurality of sensors including an acceleration sensor and a strain sensor are provided in a tool holder that holds a rotating tool, and it is determined whether a cutting failure is caused by the rotating tool or by a machine tool based on data of physical quantities detected by the sensors.

In the system of Patent Literature 1, measurement data during cutting machining in a target machine tool is accumulated for a predetermined period, and the accumulated data is analyzed to determine the cause of the failure. In order to correctly perform the data analysis, it is useful to use information on the state of the rotating tool (that is, whether the tool is rotating, whether the workpiece is being machined) for the accumulated continuous data of the sensor.

Thus, in the present embodiment, a method of determining the state of the rotating tool from data of the acceleration sensor and the strain sensor disposed in the tool holder will be described.

### (Details of Rotating Tool)

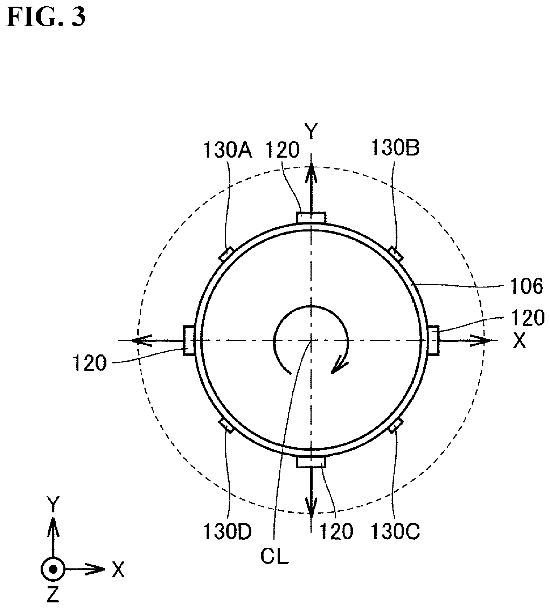

Next, rotating tool 100 will be described in detail with reference to FIGS. 2 and 3. FIG. 2 is a diagram showing rotating tool 100 in which shaft portion 106 is attached to tool holder 105. FIG. 3 is a diagram showing the arrangement of the each sensor when rotating tool 100 is viewed from the positive direction of the Z-axis.

Tool holder 105 includes a body 110 that is attached to main shaft 14 of machine tool 10. One end of body 110 is attached to main shaft 14. Shaft portion 106 is attached to the other end of body 110.

Rotating tool 100 is, for example, an end mill, a milling cutter, a drill, a reamer, a tap, or the like, and cuts workpiece 18 by the rotation of the tool itself. In FIG. 2, rotating tool 100 is an end mill, and a cutting edge portion is provided in a first end portion 107 of substantially cylindrical shaft portion 106, and a second end portion 108 of shaft portion 106 is attached to tool holder 105. The cutting edge portion may be formed on shaft portion 106, or a removable cutting edge portion may be attached to shaft portion 106. When a motor (not shown) provided in main shaft 14 is driven, rotating tool 100 rotates in a clockwise (CW) direction around a rotation axis CL when viewed from the positive direction of the Z-axis, and the cutting edge portion and workpiece 18 come into contact with each other, whereby workpiece 18 is cut.

As shown in FIG. 3, a plurality of sensors 120, 130 are attached to the periphery of shaft portion 106 of tool holder 105. In the present embodiment, the plurality of sensors include four acceleration sensors 120 and four strain sensors 130. In tool holder 105, a communication device 140 and a battery 150 are disposed on a substrate (not shown). Communication device 140 is a wireless communication device driven by battery 150. Communication device 140 can wirelessly communicate with communication device 210 of management apparatus 200, and wirelessly transmits the detection value detected by sensor 120, 130 to management apparatus 200.

Sensor 120, 130 may be directly attached to shaft portion 106 or may be disposed on tool holder 105 capable of measuring the deformation state of rotating tool 100. In FIG. 3, for ease of explanation, a state in which sensor 120, 130 is directly attached to shaft portion 106 will be described.

Four acceleration sensors 120 are respectively disposed at positions at which intervals between central portions of acceleration sensors 120 are 90° in the peripheral direction on the surface of shaft portion 106. That is, four acceleration sensors 120 are disposed on a concentric circle around rotation axis CL of shaft portion 106 in a same plane having rotation axis CL as a normal line. When viewed in a plan view from the Z axial direction, two of four acceleration sensors 120 are disposed point-symmetrically with respect to rotation axis CL of rotating tool 100. Further, the remaining two of four acceleration sensors 120 are also disposed point-symmetrically with respect to rotation axis CL of rotating tool 100. Each acceleration sensor 120 has a measurement sensitivity at least in the radial direction, and can detect centrifugal acceleration when rotating tool 100 rotates.

Four strain sensors 130 include strain sensors 130A to 130D. Strain sensors 130A to 130D are disposed on a concentric circle around rotation axis CL of shaft portion 106 in a same plane having rotation axis CL as a normal line, similarly to acceleration sensor 120. Strain sensors 130A to 130D are each disposed at positions at which intervals between central portions of the strain sensors are 90° in the peripheral direction on the surface of shaft portion 106. In the example of FIG. 3, each of strain sensors 130A to 130D is disposed between two adjacent acceleration sensors. In a case where acceleration sensor 120 and strain sensor 130 are not disposed on the same plane, acceleration sensor 120 and strain sensor 130 may be disposed at the same position in a plan view from the Z axial direction. Strain sensor 130A and strain sensor 130C are disposed point-symmetrically with respect to rotation axis CL of rotating tool 100. Further, strain sensor 130B and strain sensor 130D are also disposed point-symmetrically with respect to rotation axis CL of rotating tool 100.

Strain sensors 130A to 130C are disposed so as to have measurement sensitivity in the vertical direction (Z axial direction). Thus, strain sensors 130A to 130C can detect the deflection of shaft portion 106 when a force perpendicular to the Z axial direction acts on rotating tool 100. On the other hand, strain sensor 130D is disposed so as to have measurement sensitivity in the peripheral direction (shear direction). Thus, strain sensor 130D can detect a force acting on rotating tool 100 in the peripheral direction, that is, a rotational torque.

### (State Determination of Rotating Tool)

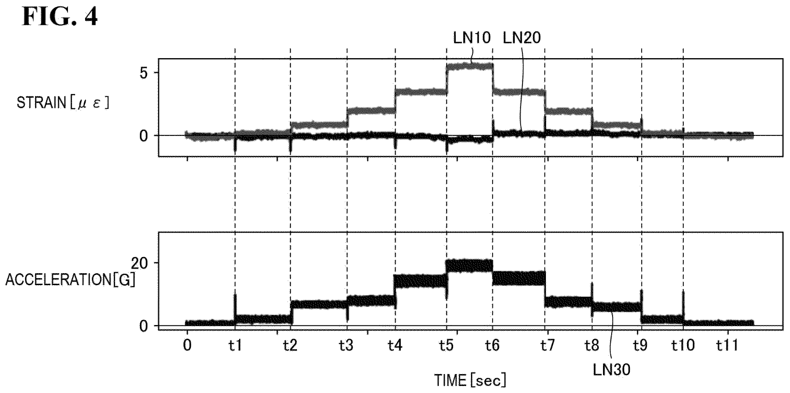

FIG. 4 is a diagram showing an example of detection signals of each of sensors 120, 130 when the rotational speed of rotating tool 100 is changed in a no-load state. The upper part of FIG. 4 shows the strain detected by strain sensor 130 (lines LN10 and LN20), and the lower part of FIG. 4 shows the acceleration detected by acceleration sensor 120 (line LN30). The horizontal axis represents time, and the rotational speed of rotating tool 100 is increased in a stepwise manner with time at times t1 to t5, and the rotational speed of rotating tool 100 is decreased in a stepwise manner with time at times t6 to t11. In the upper part of FIG. 4, a line LN10 indicates a vertical strain that is a strain in the vertical direction (Z axial direction) by strain sensors 130A to 130C. A line LN20 indicates the strain in the peripheral direction by strain sensor 130D.

As shown in FIG. 4, the vertical strain detected by strain sensors 130A to 130C changes according to the rotational speed, and the vertical strain increases as the rotational speed increases, and the vertical strain decreases as the rotational speed decreases. This is a strain caused by rotating tool 100 (and/or tool holder 105) expanding in the vertical direction as rotating tool 100 rotates. On the other hand, the shear strain in the peripheral direction detected by strain sensor 130D hardly changes with respect to the rotational speed.

Further, regarding the centrifugal acceleration detected by acceleration sensor 120, due to the centrifugal force caused by the rotation of rotating tool 100, the centrifugal acceleration increases as the rotational speed increases, and the centrifugal acceleration decreases as the rotational speed decreases.

From the characteristics as described above, it is understood that it is possible to determine whether rotating tool 100 is rotating from the data of the vertical strain detected by strain sensors 130A to 130C and the centrifugal acceleration detected by acceleration sensor 120. However, since the vertical strain is detected even when an external force acts on rotating tool 100 during cutting or the like and deformation occurs, it can be said that it is appropriate to use data of centrifugal acceleration detected by acceleration sensor 120 for the determination of the presence or absence of rotation of rotating tool 100.

On the other hand, when rotating tool 100 is in the process of machining, an external force is applied in at least one of the direction of the rotation axis of rotating tool 100 and the direction orthogonal to the rotation axis by the contact between the cutting edge portion and workpiece 18. Thus, during machining, strain can be detected by any of strain sensors 130A to 130D. Here, as shown in FIG. 4, with respect to strain sensors 130A to 130C for detecting the vertical strain in the Z axial direction, even in a state where the reaction force from workpiece 18 is not acting, the strain is detected when rotating tool 100 is rotating, and thus, it is not possible to determine whether rotating tool 100 is machining using the sensors. Thus, by using the shear strain (i.e., the rotational torque) detected by strain sensor 130D, it is possible to determine whether rotating tool 100 and workpiece 18 are in contact with each other, that is, whether rotating tool 100 is machining, without being affected by the rotation of rotating tool 100.

As described above, in order to determine the state (rotating/machining) of rotating tool 100, it is necessary to dispose at least one strain sensor for detecting the shear strain and at least one acceleration sensor for detecting the centrifugal acceleration.

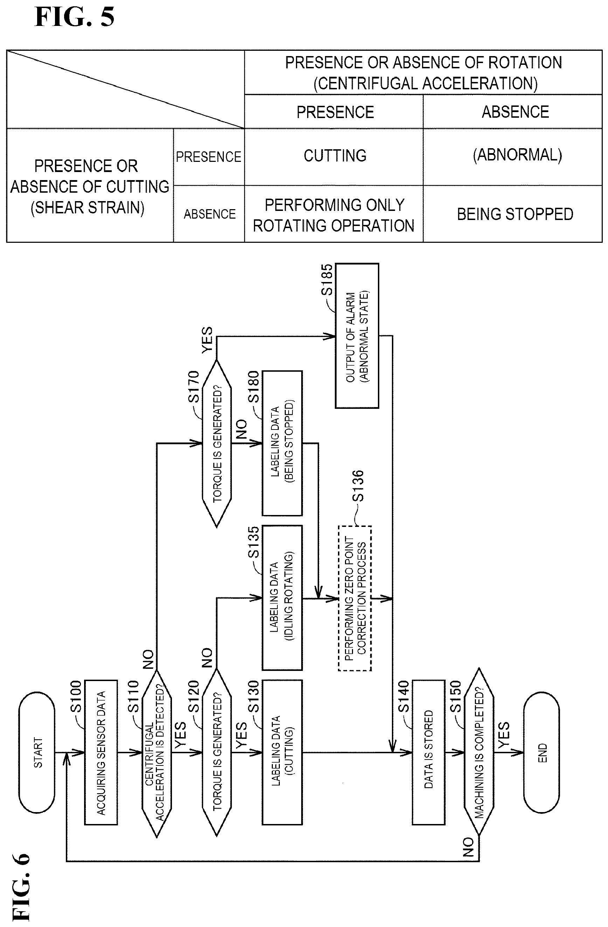

FIG. 5 is a diagram for explaining the state of rotating tool 100 based on the detection signals of the sensors. As described in FIG. 4, the presence or absence of the rotation of rotating tool 100 can be determined by using the centrifugal acceleration detected by acceleration sensor 120. Further, the presence or absence of cutting can be determined by using a shear strain detected by strain sensor 130D.

Then, by combining these detection data, the state of rotating tool 100 can be detected as follows. First, when centrifugal acceleration is detected by acceleration sensor 120 and shear strain is detected by strain sensor 130D, it can be determined that workpiece 18 is actually being cut by rotating tool 100.

Next, when centrifugal acceleration is detected by acceleration sensor 120 but no shear strain is detected by strain sensor 130D, it can be determined that rotating tool 100 is in a state of performing only a rotating operation in a no-load state (idle state). Further, when neither centrifugal acceleration is detected by acceleration sensor 120 nor shear strain is detected by sensor 130D, it can be determined that rotating tool 100 is stopped.

Note that, when centrifugal acceleration is not detected by acceleration sensor 120 but shear strain is detected by strain sensor 130D, rotating tool 100 is in a stopped state and an external force is applied, and thus, this is a state that does not actually occur in normal operation. Such a state is, for example, an abnormal state such as a case where rotating tool 100 stops biting due to an excessive cutting amount of rotating tool 100 or a case where rotating tool 100 collides with workpiece 18 while the tool is in a stopped state, or a state where an abnormality occurs in the sensor. Thus, when centrifugal acceleration is not detected and shear strain is detected, it can be determined that the abnormal state has occurred.

In a case where a sensor is attached to tool holder 105, centrifugal acceleration may not be detected and shear strain may be detected even when shaft portion 106, which is a tool body, is replaced. In addition, even in the case of a rotating tool in which a sensor is attached to shaft portion 106 and the cutting edge tip at the tip of shaft portion 106 is replaceable, centrifugal acceleration may not be detected and shear strain may be detected when the cutting edge tip is replaced. That is, in addition to the abnormal state of the tool, the timing of tool replacement can be recorded.

Further, the state of rotating tool 100 determined using the centrifugal acceleration detected by acceleration sensor 120 and the shear strain detected by strain sensor 130D can also be applied to the following process.

### (1) Zero point correction process of strain sensor.

As described above, when the shear strain is not detected by strain sensor 130D, that is, when rotating tool 100 is "performing only a rotating operation" or "being stopped" in which no external force is applied to rotating tool 100, the vertical strain is not detected by strain sensors 130A to 130C under normal circumstances. However, when a thermal strain caused by a temperature distribution due to an ambient environmental temperature or a cutting fluid or an expansion strain caused by a centrifugal force due to rotation as shown in FIG. 4 is generated, values of strain sensors 130A to 130C may be detected.

Thus, when "performing only a rotating operation" or "being stopped" is determined, the offset of the vertical strain data can be removed by performing the zero point correction process of the measurement values of strain sensors 130A to 130C.

### (2) Labeling of Accumulated Data.

The determination of the failure of rotating tool 100 is performed by accumulating continuous measurement data and analyzing the accumulated data as described in Patent Literature 1. However, it is difficult to grasp the relationship between a change in sensor data and a change in tool state from the measurement data as it is.

Thus, by storing the information of the tool state determined by the classification criterion as shown in FIG. 5 by adding the tool state to the measurement data with label information, the relationship between the change of the sensor data and the change of the tool state can be easily grasped in the subsequent analysis and can be used for data arrangement.

### (3) Data classification process for each product.

In machine tool 10, machining is performed in accordance with a preprogrammed sequence, and in general, machining of the same product is performed continuously. Thus, when machining one product (workpiece), it is possible to know in advance how the tool state changes from the start of machining to the completion of machining based on the predetermined machining order. In other words, when the labeling process on the measurement data described in (2) can be performed, it is possible to classify which range of data group in the continuous measurement data corresponds to one product from the state transition of the rotating tool.

Conversely, when the range of the data group from the start of machining to the completion of machining for each product can be recognized in advance by, for example, a signal indicating the setup change of workpiece 18, if the state transition (second data) of the rotating tool determined from the measurement data in the data group is different from the state transition pattern (first data) of the rotating tool stored in advance for the product, it is determined that the corresponding product may have a machining abnormality, and the abnormality can be notified to the user.

FIG. 6 is a flowchart for explaining a state determination process of rotating tool 100, which is executed by management apparatus 200 in cutting system 50 of the present embodiment. The process shown in FIG. 6 is realized by CPU 220 executing a program read from storage device 230 in management apparatus 200. The process of FIG. 6 may be performed off-line on pre-stored measurement data or on-line on data measured during the machining of actual workpiece 18.

Apart or all of the process shown in FIG. 6 may be implemented by hardware such as a semiconductor integrated circuit. The program executed by CPU 220 can be installed from an external server apparatus or the like. Alternatively, the program may be distributed in a state of being stored in a storage medium such as a CD-ROM or a semiconductor memory.

Referring to FIG. 6, in a step (hereinafter, step is abbreviated as "S") 100, management apparatus 200 acquires the sensor data transmitted from tool holder 105 or the sensor data stored in storage device 230. Then, management apparatus 200 determines whether centrifugal acceleration is detected, that is, whether rotating tool 100 is "rotating", based on the measurement data of acceleration sensor 120 in a S110. Specifically, management apparatus 200 determines that rotating tool 100 is "rotating" when the centrifugal acceleration detected by acceleration sensor 120 is equal to or more than the first threshold value, and determines that rotating tool 100 is "being stopped" when the detected centrifugal acceleration is less than the first threshold value.

When centrifugal acceleration is detected and rotating tool 100 is "rotating" (YES in the S110), the process proceeds to a S120. In the S120, management apparatus 200 determines whether a shear strain is detected, that is, whether an external force acts on rotating tool 100 to generate a torque, based on the measurement data of strain sensor 130D. Specifically, management apparatus 200 determines that rotating tool 100 is in contact with workpiece 18 and torque is generated when the shear strain detected by strain sensor 130D is equal to or more than a second threshold value, and determines that rotating tool 100 is not in contact with workpiece 18 and torque is not generated when the detected shear strain is less than the second threshold value.

When the shear strain is detected and the torque is generated in rotating tool 100 (YES in the S120), the process proceeds to a S130, and management apparatus 200 determines that the tool state of rotating tool 100 is "cutting". Then, management apparatus 200 assigns a label indicating "cutting" to the target data in a S140 and stores the target data and the label in storage device 230.

On the other hand, when no torque is generated in rotating tool 100 (NO in the S120), the process proceeds to a S135, and management apparatus 200 determines that rotating tool 100 is "idling rotating" in which rotating tool 100 performs only the rotating operation. When the process is performed online, management apparatus 200 may next perform the zero point correction process for strain sensors 130A to 130D that measure the vertical strain in a S136. Note that, when the process is executed offline, the process of the S136 is skipped. Thereafter, management apparatus 200 assigns a label indicating "idling rotating" to the target data and stores the label in storage device 230 in the S140.

On the other hand, when centrifugal acceleration is not detected and rotating tool 100 is not "rotating" (NO in the S110), the process proceeds to a S170, and management apparatus 200 determines whether torque is generated in rotating tool 100 based on the measurement data of strain sensor 130D. When the torque is not generated in rotating tool 100 (NO in the S170), the process proceeds to a S180, and management apparatus 200 determines that rotating tool 100 is "being stopped". Management apparatus 200 then assigns a label indicating "being stopped" to the target data and stores the target data and the label in storage device 230 in the S140.

On the other hand, when the torque is generated in rotating tool 100 even though the centrifugal acceleration is not detected (YES in the S170), the process proceeds to a S185, and management apparatus 200 determines that rotating tool 100 is in the "abnormal state" and outputs an alarm to the user. Thereafter, management apparatus 200 assigns a label indicating "abnormal state" to the target data and stores the target data and label in storage device 230 in the S140.

When the data is stored in the S140, the process proceeds to a S150, and management apparatus 200 determines whether the machining using rotating tool 100 is completed. When the machining is not completed (NO in the S150), the process is returned to the S100, and management apparatus 200 repeatedly executes the processes from the S100 to the S140. On the other hand, when the machining is completed (YES in the S150), management apparatus 200 completes the state determination process.

Although not shown in FIG. 6, when the process is executed offline, management apparatus 200 determines whether the process of all sensor data to be processed in storage device 230 has been completed in the S150. When there is any remaining data to be processed (NO in the S150), the process returns to the S100. On the other hand, when the process has been completed for all data (YES in the S150), management apparatus 200 terminates the state determination process.

By performing control according to the above process, the state of the rotating tool attached to the tool holder can be determined based on the data of the acceleration sensor and the strain sensor attached to the tool holder.

### (Modification of Rotating Tool)

FIG. 7 is a diagram showing a rotating tool 100A for modification. Rotating tool 100A does not include a tool holder like rotating tool 100 of the embodiment 1, and has a configuration in which a shaft portion is attached to a main shaft of a machine tool including a tool holder.

Referring to FIG. 7, rotating tool 100A includes a shaft portion 106A, and acceleration sensor 120 and strain sensor 130 attached around shaft portion 106A. Acceleration sensor 120 and strain sensor 130 are accommodated in a housing 170 provided in shaft portion 106A. Acceleration sensor 120 and strain sensor 130 are disposed at equal intervals in the peripheral direction of shaft portion 106A, similarly to rotating tool 100 of the embodiment 1. Although not shown in FIG. 7, communication device 140 and battery 150 shown in FIG. 2 are also disposed in housing 170.

An interchangeable cutting insert (throw-away tip) 160 is attached to first end portion 107 of shaft portion 106A. Second end portion 108 of shaft portion 106A is attached to main shaft 14 of machine tool 10 having the tool holder.

As described above, even in the rotating tool attached to the main shaft including the tool holder, the acceleration sensor and the strain sensor are disposed in the shaft portion of the rotating tool, and thus it is possible to determine the state of the rotating tool based on the data of the sensors.

The embodiments disclosed herein are to be considered in all respects as illustrative and not restrictive. The scope of the present disclosure is defined by the appended claims rather than the description of the embodiments, and is intended to include all modifications within the scope and meaning equivalent to the claims.

### REFERENCE SIGNS LIST

10 machine tool, 12 head, 14 main shaft, 16 table, 18 workpiece, 20 bed, 50 cutting system, 100, 100A rotating tool, 105 tool holder, 106, 106A shaft portion, 107 first end portion, 108 second end portion, 110 body, 120 acceleration sensor, 130, 130A to 130D strain sensor, 140, 210 communication device, 150 battery, 160 cutting insert, 170 housing, 200 management apparatus, 220 CPU, 230 storage device, 240 input/output interface, 250 bus, 260 display device, 270 input device, CL rotation axis

## Claims

1. A cutting system comprising:
a rotating tool including a shaft portion having a first end portion provided with a cutting edge portion for cutting a workpiece, and a second end portion attached to a machine tool;
a plurality of sensors attached to the shaft portion; and
a management apparatus configured to determine a state of the rotating tool based on sensor information from the plurality of sensors,
wherein the plurality of sensors include
at least one acceleration sensor, and
at least one strain sensor, and
wherein the management apparatus is configured to
determine whether the rotating tool is rotating based on sensor information from the at least one acceleration sensor, and
determine whether the rotating tool and the workpiece are in contact with each other based on sensor information from the at least one strain sensor.

2. The cutting system according to claim 1,
wherein the rotating tool rotates about an axial direction of the shaft portion as a rotation axis, and
wherein the at least one acceleration sensor is disposed to detect a centrifugal acceleration of the rotating tool.

3. The cutting system according to claim 2,
wherein the plurality of sensors include a plurality of acceleration sensors, and
wherein the plurality of acceleration sensors are disposed on a concentric circle around the rotation axis of the shaft portion in a same plane having the rotation axis as a normal line.

4. The cutting system according to claim 3, wherein the plurality of acceleration sensors include four acceleration sensors disposed at positions at which intervals between central portions of the acceleration sensors are 90° in a peripheral direction of the shaft portion.

5. The cutting system according to any one of claims 1 to 4,
wherein the management apparatus is configured to
determine that the rotating tool is rotating, when an acceleration detected by the at least one acceleration sensor is more than a first threshold value, and
determine that the rotating tool is being stopped when the acceleration detected by the at least one acceleration sensor is less than the first threshold value.

6. The cutting system according to claim 1,
wherein the rotating tool rotates about an axial direction of the shaft portion as a rotation axis, and
wherein the at least one strain sensor is disposed to detect a strain in a peripheral direction of the shaft portion.

7. The cutting system according to claim 6,
wherein the plurality of sensors include a plurality of strain sensors, and
wherein the plurality of strain sensors are disposed on a concentric circle around the rotation axis of the shaft portion in a same plane having the rotation axis as a normal line.

8. The cutting system according to claim 7, wherein the plurality of strain sensors include four strain sensors disposed at positions at which intervals between central portions of the strain sensors are 90° in a peripheral direction of the shaft portion.

9. The cutting system according to any one of claims 6 to 8,
wherein the management apparatus is configured to
determine that the rotating tool is in contact with the workpiece when the strain in the peripheral direction of the shaft portion detected by the at least one strain sensor is more than a second threshold value, and
determine that the rotating tool is not in contact with the workpiece, when the strain in the peripheral direction of the shaft portion detected by the at least one strain sensor is less than the second threshold value.

10. The cutting system according to claim 1,
wherein the rotating tool rotates about an axial direction of the shaft portion as a rotation axis, and
wherein the at least one acceleration sensor and the at least one strain sensor are alternately disposed in a peripheral direction of the shaft portion.

11. The cutting system according to claim 1, wherein the management apparatus is configured to determine whether the rotating tool is cutting based on the sensor information from the at least one acceleration sensor and the sensor information from the at least one strain sensor.

12. The cutting system according to claim 11, wherein the management apparatus is configured to determine that the rotating tool is cutting, when an acceleration detected by the at least one acceleration sensor is more than a first threshold value and a strain in a peripheral direction of the shaft portion detected by the at least one strain sensor is more than a second threshold value.

13. The cutting system according to claim 11, wherein the management apparatus is configured to determine that the rotating tool is in an abnormal state, when an acceleration detected by the at least one acceleration sensor is less than a first threshold value and a strain in a peripheral direction of the shaft portion detected by the at least one strain sensor is more than a second threshold value.

14. The cutting system according to claim 13, wherein the management apparatus is configured to notify a user of the abnormal state when the management apparatus has determined that the rotating tool is in the abnormal state.

15. The cutting system according to claim 11, wherein the management apparatus is configured to determine that the rotating tool is rotating in a state where it is not cutting, when an acceleration detected by the at least one acceleration sensor is more than a first threshold value and a strain in a peripheral direction of the shaft portion detected by the at least one strain sensor is less than a second threshold value.

16. The cutting system according to claim 1,
wherein the at least one strain sensor includes a first sensor configured to detect a strain in a peripheral direction of the shaft portion, and a second sensor configured to detect a strain in an axial direction of the shaft portion, and
wherein the management apparatus is configured to correct a measurement value of the second sensor to zero at a timing when the strain in the peripheral direction of the shaft portion detected by the first sensor is less than a second threshold value.

17. The cutting system according to any one of claims 1 to 16,
wherein the management apparatus further includes a storage device for storing the sensor information from the plurality of sensors, and
wherein the management apparatus is configured to store the sensor information from the plurality of sensors in the storage device along with label information corresponding to a state of the rotating tool.

18. The cutting system according to claim 17, wherein the management apparatus is configured to store in advance a state transition of the rotating tool from start of machining to completion of the machining of the workpiece, and classify the sensor information stored in the storage device as a machining data group on a workpiece-by-workpiece basis based on the state transition and the label information.

19. A method of determining a state of a rotating tool, at least one acceleration sensor and at least one strain sensor being disposed on the rotating tool, the method comprising:
acquiring sensor information from the at least one acceleration sensor and the at least one strain sensor;
determining whether the rotating tool is rotating based on the sensor information from the at least one acceleration sensor; and
determining whether the rotating tool and a workpiece are in contact with each other based on the sensor information from the at least one strain sensor.
